Europäisches Patentamt

European Patent Office

Office européen des brevets

(11) Publication number: **0 093 025**
A1

# EUROPEAN PATENT APPLICATION

(21) Application number: **83302420.1**

(22) Date of filing: **28.04.83**

(51) Int. Cl.³: **G 01 M 3/18**
**F 17 D 5/06**

(30) Priority: **28.04.82 GB 8212336**

(43) Date of publication of application:
**02.11.83 Bulletin 83/44**

(84) Designated Contracting States:
**AT BE CH DE FR IT LI LU NL SE**

(71) Applicant: Maxwell, Anthony John
Residence le Mirabeau 4, Rue des Citronniers
Monte Carlo 98000(MC)

(72) Inventor: Maxwell, Anthony John
Residence le Mirabeau 4, Rue des Citronniers
Monte Carlo 98000(MC)

(74) Representative: Sturt, Clifford Mark et al,
MARKS & CLERK 57-60 Lincoln's Inn Fields
London WC2A 3LS(GB)

(54) A sensor for use in monitoring lengths of hose.

(57) The present invention relates to a sensor for monitoring lengths of hose and is particularly suitable for use with oil suction and discharge hoses.

The invention provides a hose (20) having two or more plies (22, 26) and a sensing element (24) located between the plies (22, 26). The sensing element (24) is responsive to the electromagnetic properties of fluid present between the plies (22, 26) as a result of a failure of an inner ply (22) of the hose (20). The particular advantage of this invention results from the fact that the sensing element (24) is composed of carbon fibres.

The carbon fibres can be in chopped fibre form or in the form of a continuous tow. The carbon fibres may be doped with metallic particles in order to improve their electro-magnetic characteristics and preferably the carbon fibres are encapsulated in a paper or polymer sheath.

This form of sensing element (24) is typically compatible with the special polymers, fabrics and wire cords used in oil suction and discharge hose construction and the sensing element can withstand the severe mechanical and high temperature processes used in the hose construction.

22 24 26 28 32 30 34
20

Croydon Printing Company Ltd.

"A SENSOR FOR USE IN MONITORING LENGTHS OF HOSE"

The present invention relates to a sensor for use in monitoring lengths of hose.

The sensor is particularly applicable to the monitoring of flexible heavy duty lengths of hose used to transfer oil at sea. Such hoses are known as oil suction and discharge hoses. United Kingdom published Patent application No. 2 057 696A is directed to a method and apparatus for monitoring lengths of hose and specifically describes the application of monitoring oil suction and discharge hoses.

It is often necessary to load and discharge crude oil at sea due to problems of berthing large ocean going tankers alongside shore facilities in shallow waters.

A Single Buoy Mooring system is generally used for this purpose where for example oil is conveyed through steel sub surface pipelines from onshore storage or pumping facilities to a point on the sea bed under the surface floating buoy.

Flexible submarine hoses connect from the fixed pipeline via the buoy through floating hoses on the surface to a "pick-up" point which is connected, as required, to the tanker manifold. Both the submarine and floating hose sections comprise individual sections bolted together as required.

It is a problem in such a system of loading and unloading tankers that in the event of one of the hose sections, of which there are several, breaking, oil will leak out and cause pollution. In order therefore to avoid environmental pollution, it is desirable to detect imminent leakage of oil from a hose section prior to its occurrence so as to enable the hose section to be replaced.

United Kingdom published application No. 2,057,696A describes an oil suction and discharge type hose incorporating a sensing element. The present invention seeks to provide improved sensing elements which are particularly suitable in providing an early warning detection of the presence of hydrocarbons between the polymer making up the hose construction.

According to the present invention there is provided a hose for conveying fluids, the hose having two or more plies and a sensing element located between the plies, the sensing element being responsive to the electromagnetic properties of fluid present between the plies as a result of a failure of an inner ply of the hose, characterised in that the sensing element comprises carbon fibres.

The carbon fibres forming the sensing element are multifilament 10,000 - 12,000 aligned chopped fibres of 1 - 3 mm length, and 10,000 strand continuous carbon fibre tow.

- 3 -

The advantage of the present invention may be enhanced by the addition of metallic, particularly ferrite, particles to the carbon fibres so as to improve electromagnetic characteristics. Such "doping" is carried out by combining the particles on epoxy resin liquid.

The sensing element provided by the present invention is physically compatible with the special polymers, fabrics and wire cords used in oil suction and discharge hose construction, and such sensing elements can withstand the severe mechanical and high temperature processes used in the hose construction.

The sensing element of the present invention has been found to provide optimum compatibility with the materials commonly used for manufacturing fluid transport hoses.

In a preferred embodiment the carbon fibre sensing element is provided within a paper or polymer sheath.

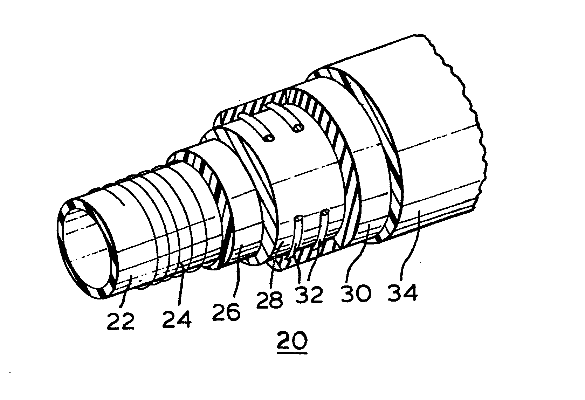

The invention will now be described further, by way of example, with reference to the accompanying drawing which shows a section of an oil suction and discharge hose, the hose section being cut away to illustrate the composite structure of the hose.

- 4 -

The drawing shows a hose section 20 and it should be noted that such hose sections must be flexible and yet capable of withstanding the harsh environment to which they are subjected. The hose section 20 is of a composite structure consisting of a high grade synthetic rubber tube 22, a sensing element 24 which is in contact with the outer surface of the tube 22, a textile ply 26 impregnated and coated with synthetic rubber, an overlay 28 of plies of braided high tensile steel cable, a layer of synthetic rubber 30 in which helically wound steel wire 32 is embedded and an outer sheath of wear resistant material 34.

The sensing element 24 comprises multifilament chopped carbon fibres enclosed as a core between two paper or polymer tapes so as to form an electrically continuous path. The electromagnetic characteristics of the sensing element may be further improved by the addition of metallic, and particularly ferrite, particles to the carbon fibres.

The chopped fibre sensing elements are positioned at the nipple/flange ends of the oil suction and discharge hoses.

In both circumstances where the sensing element is in the form of chopped fibre or where the sensing element is in the form of a continuous fibre tow, the sensing elements are applied as loops. The ends of the loops are connected with silver plated cables which connect into an encapsulated sensing unit (not shown), which is also built into the hose.

The fibres are arranged so as to form an electrically continuous longitudinal path between two polymer or paper tapes, or as a core within a paper or polymer tube. The selection between use of polymer tapes or a polymer tube will depend upon the size and type of hose in which the sensing element is to be installed.

The continuous carbon fibre tow sensors are positioned between plies of polymer coated fabrics spiralled down the hose body. The carbon fibre sensing element is well suited to the detection of hydrocarbon and other liquids and provides good compatability with the hose materials. Incorporation of the sensing element into the hose occurs during manufacture of the hose and the carbon fibre sensing element is advantageous since it can readily withstand the mechanical and temperature processes utilised during hose construction.

The sensing elements react to the presence of hydrocarbons first by the pressurized contact of the liquids against the tape in the case of the chopped fibre sensor, and directly against the tow in the case of the continuous fibre sensors.

In both cases the paper or polymer encapsulated chopped or continuous carbon fibre sensors, and the polymer fabric composites surrounding the sensing elements, degrade and loose adhesion due to combined chemical and microbial breakdown created by infiltrating hydrocarbon liquids.

Intermolecular conduction occurs as the hydrocarbons react with the carbon and graphite molecules in the carbon fibres. Macroscopic migration of the fibres onto surfaces of surrounding polymers appears to create molecular three dimensional links with clusters or chains of carbon blacks, domains of conductivity and resistance are established, such changes being detected by sequential interrogation of the sensor. In the case of the continuous fibre tow similar action takes place as hydrocarbons migrate between the fibres and the surrounding polymer fabric plies.

The change in resistance is communicated to appropriate sensor apparatus. The sensor apparatus are connected to radio frequency transmission circuits installed in the hoses and the transmission circuits relay alarm signals to remotely located visual and audio displays.

CLAIMS

1.   A hose (20) for conveying fluids, the hose (20) having two or more plies (22,26) and a sensing element (24) located between the plies (22,26), the sensing element (24) being responsive to the electromagnetic properties of fluid present between the plies (22,26) as a result of a failure of an inner ply (22) of the hose (20), characterised in that the sensing element (24) comprises carbon fibres.

2.   A hose (20) as claimed in claim 1, characterised in that metallic particles are added to the carbon fibres so as to improve their electromagnetic characteristics.

3.   A hose (20) as claimed in claim 1 or 2, characterised in that the carbon fibres are enclosed in a sheath.

4.   A hose (20) as claimed in any preceding claim, characterised in that the carbon fibres comprise a plurality of aligned chopped fibres.

5.   A hose (20) as claimed in any of claims 1 to 3, characterised in that the carbon fibres are in the form of continuous carbon fibre tow.

6.   A hose (20) as claimed in claim 2, characterised in that the particles are of a ferrite material.

7.   A hose (20) as claimed in claim 3, characterised in that the sheath is formed of paper or polymer.

8.   A hose (20) as claimed in claim 4, characterised in that a cross-section of the sensing element (24)

8.

comprises a number of chopped carbon fibres in the range 10,000 to 12,000.

9. A hose (20) as claimed in claim 5, characterised in that the continuous carbon fibre tow has of the order of 10,000 strands.

22   24   26   28   32   30   34

20

## 0093025

Application number

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | GB-A-2 057 696 (A.J. MAXWELL)<br><br>* Page 2, lines 80-96, 106-120; figure *<br><br>--- | 1-3,5-7 | G 01 M 3/18<br>F 17 D 5/06 |
| A | DE-A-1 600 461 (ING. F.W. FOX & CO.)<br>* Whole document *<br><br>----- | 1 | |

TECHNICAL FIELDS
SEARCHED (Int. Cl. ³)

G 01 M 3
F 17 D 5

The present search report has been drawn up for all claims

| Place of search | Date of completion of the search | Examiner |
|---|---|---|
| THE HAGUE | 03-08-1983 | VAN ASSCHE P.O. |